# EUROPEAN PATENT APPLICATION

(11) **EP 4 794 373 A1**
(43) Date of publication of application: **19.08.2026**
(21) Application number: 24884894.7
(22) Date of filing: 31.10.2024
(51) Int. Cl.: H04W 24/02, H04W 72/04

(54) **COMMUNICATION METHOD AND COMMUNICATION APPARATUS**

(30) Priority: 31.10.2023 CN 202311444633
(71) Applicant: HUAWEI TECHNOLOGIES CO., LTD., Shenzhen 518129 (CN)
(72) Inventor: LU, Shaozhong, Shenzhen, Guangdong 518129 (CN); GUO, Zhiheng, Shenzhen, Guangdong 518129 (CN); SONG, Xinghua, Shenzhen, Guangdong 518129 (CN); HOU, Hailong, Shenzhen, Guangdong 518129 (CN)
(74) Representative: MERH-IP Matias Erny Reichl Hoffmann Patentanwälte PartG mbB
(86) International application number: PCT/CN2024/128858
(87) International publication number: WO 2025/092894

(57) **Abstract**

A communication method includes: A first network device sends first information and second information to a second network device. The first information indicates the second network device to report third information, and the third information is for suppressing cross-link interference of the first network device to the second network device. The second information is for configuring a first measurement resource, the first measurement resource is used by the second network device to receive a first signal, and the first signal is for determining the third information. The first network device sends the first signal to the second network device, and receives the third information from the second network device. In the method, the second network device is indicated to send the third information that can be for suppress the cross-link interference of the first network device to the second network device, so that the first network device can obtain information necessary for performing suppression operations, and avoid causing cross-link interference to the second network device when subsequently sending signals by using SBFD.

## Description

This application claims priority to Chinese Patent Application No. 202311444633.7, filed with the China National Intellectual Property Administration on October 31, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

To meet requirements of emerging services, the solution of subband full duplex (subband full duplex, SBFD) is proposed to improve uplink coverage of time division duplex (time division duplex, TDD) systems. SBFD includes subband non-overlapping full duplex (subband non-overlapping duplex) and subband overlapping full duplex (subband overlapping full duplex). The subband full duplex means that in the TDD systems, network devices can implement both receiving and sending in one slot or on one orthogonal frequency division multiplexing (orthogonal frequency division multiplexing, OFDM) symbol by using different subbands for uplink transmission and downlink transmission.

However, SBFD causes cross-link interference (cross-link interference, CLI) between base stations. Therefore, how to suppress cross-link interference between base stations becomes an urgent problem to be resolved.

### SUMMARY

This application provides a communication method and a communication apparatus, to prevent the absence of necessary information for performing cross-link interference suppression operations in information reported during inter-station measurements, thereby achieving suppression of cross-link interference.

According to a first aspect, a communication method is provided. The method may be performed by a network device, or may be performed by a component (for example, a chip or a circuit) of the network device. This is not limited. For ease of description, the following uses an example in which the method is performed by the network device for description.

The method may include: A first network device sends first information and second information to a second network device. The first information indicates the second network device to report third information, and the third information is for suppressing cross-link interference of the first network device to the second network device. The second information is for configuring a first measurement resource, the first measurement resource is used by the second network device to receive a first signal, and the first signal is for determining the third information. The first network device sends the first signal to the second network device, and receives the third information from the second network device.

In this solution, the first signal may include a reference signal used for channel measurement. For example, the first signal may include a CSI-RS.

That the third information is for suppressing the cross-link interference of the first network device to the second network device means that the first network device may perform, by using the third information, an action of suppressing the cross-link interference of the first network device to the second network device. For example, the action may be CBF.

In the foregoing solution, the second network device is indicated to send the third information that can be for suppress the cross-link interference of the first network device to the second network device, so that the first network device can obtain information necessary for performing the suppression action, to suppress the cross-link interference, and the first network device can avoid causing cross-link interference to the second network device when subsequently sending a signal by using SBFD.

With reference to the first aspect, in some implementations of the first aspect, the third information includes at least one of the following: a first matrix, where the first matrix is for suppressing the cross-link interference of the first network device to the second network device; indication information of the first matrix, where the indication information of the first matrix is for determining the first matrix; and a first set of zenith and azimuth angles, where the first set of zenith and azimuth angles is for suppressing the cross-link interference of the first network device to the second network device.

Optionally, the third information may further include a first quantity of layers and/or a first quantity. The first quantity of layers includes a quantity of columns of the first matrix, the first quantity includes a quantity of elements included in the first set of zenith and azimuth angles, and one element in the first set of zenith and azimuth angles includes one zenith angle and one azimuth angle.

In a possible implementation, if the first information includes first indication information, and the first indication information indicates that a frequency band in which the third information is reported is a subband, the third information may include N first matrices and/or indication information of the N first matrices, where each of the first matrices corresponds to one subband, indication information of each of the first matrices corresponds to one subband, the first matrices are for suppress the cross-link interference of the first network device to the second network device, and N is a positive integer less than or equal to a quantity of subbands.

In a possible implementation, the first indication information includes a length of a subband and a quantity of subbands.

The indication information of the first matrix may indicate the first matrix. For example, the indication information of the first matrix may include an index (index) of the first matrix, and the first network device may determine the corresponding first matrix based on the index.

In the foregoing solution, the first network device may obtain a parameter that is for suppressing the cross-link interference of the first network device to the second network device, to suppress the cross-link interference of the first network device to the second network device.

With reference to the first aspect, in some implementations of the first aspect, the third information further includes first request information, and the first request information is for requesting to suppress the cross-link interference of the first network device to the second network device.

The first request information may be used to enable the first network device to suppress the cross-link interference to the second network device, thereby improving communication reliability.

With reference to the first aspect, in some implementations of the first aspect, the method further includes: The first network device receives first receive power and/or a first path loss from the second network device, where the first receive power is receive power at which the second network device receives the first signal, and the first path loss is a path loss from the first network device to the second network device. The first network device determines whether to suppress the cross-link interference of the first network device to the second network device.

For example, if the first receive power is greater than a first threshold or the first path loss is less than a second threshold, the first network device determines not to suppress the cross-link interference of the first network device to the second network device.

In this solution, whether to suppress the cross-link interference of the first network device to the second network device is determined based on receive power and/or a path loss, so that suppression operations can be selectively performed, and an unnecessary suppression operation can be reduced, thereby improving communication flexibility. Because downlink performance of the first network device is affected when CLI suppression is performed, downlink performance can be improved when unnecessary CLI suppression is not performed.

With reference to the first aspect, in some implementations of the first aspect, the first information further indicates that the third information includes at least one of the following: the first matrix, where the first matrix is for suppressing the cross-link interference of the first network device to the second network device; the indication information of the first matrix, where the indication information of the first matrix is for determining the first matrix; the first set of zenith and azimuth angles, where the first set of zenith and azimuth angles is for suppressing the cross-link interference between the first network device and the second network device; the first quantity of layers, where the first quantity of layers is the quantity of columns of the first matrix; the first quantity, where the first quantity is the quantity of elements included in the first set of zenith and azimuth angles, and one element in the first set of zenith and azimuth angles includes one zenith angle and one azimuth angle; and the first request information, where the first request information is for requesting to suppress the cross-link interference of the first network device to the second network device.

In the foregoing solution, the first information is directly for indicating a parameter or information that needs to be included in the third information, so that the first network device can effectively obtain information that is needed for performing an operation of suppressing the cross-link interference of the first network device to the second network device, thereby improving communication efficiency and reliability.

With reference to the first aspect, in some implementations of the first aspect, the first information includes second indication information, and the second indication information indicates the first quantity of layers and/or the first quantity.

With reference to the first aspect, in some implementations of the first aspect, the second information includes transmit power of the first signal on one frequency unit and/or start time of the first signal.

The start time of the first signal is absolute time at which the first signal is sent for the first time. For example, the time may be UTC time.

A corresponding path loss may be calculated based on the transmit power. Alignment between time for sending the first signal and time for measuring the first signal may be implemented based on the start time at which the first signal is sent, thereby improving communication reliability.

With reference to the first aspect, in some implementations of the first aspect, the method further includes: The first network device sends first configuration information to the second network device, where the first configuration information is for configuring a first reporting setting, and the first reporting setting is used by the second network device to report the third information.

With reference to the first aspect, in some implementations of the first aspect, the method further includes: The first network device receives fourth information from the second network device, where the fourth information indicates the first network device to modify the first measurement resource. The first network device sends fifth information to the second network device based on the fourth information, where the fifth information indicates a modified first measurement resource.

In the foregoing solution, a measurement resource is modified, so that inter-station measurement efficiency can be improved, and repeated measurement can be avoided, thereby reducing measurement overheads. In addition, omission of necessary measurement can be avoided, and measurement reliability can be improved.

With reference to the first aspect, in some implementations of the first aspect, the fourth information includes a parameter that is recommended or not recommended by the second network device.

With reference to the first aspect, in some implementations of the first aspect, the method further includes: The first network device sends a second signal to a terminal device based on the third information.

According to a second aspect, a communication method is provided. The method may be performed by a network device, or may be performed by a component (for example, a chip or a circuit) of the network device. This is not limited. For ease of description, the following uses an example in which the method is performed by the network device for description.

The method may include: A second network device receives first information and second information from a first network device. The first information indicates the second network device to report third information, and the third information is for suppressing cross-link interference of the first network device to the second network device. The second information is for configuring a first measurement resource, the first measurement resource is used by the second network device to receive a first signal, and the first signal is for determining the third information.

The second network device receives the first signal from the first network device. The second network device sends the third information to the first network device.

With reference to the second aspect, in some implementations of the second aspect, the third information includes at least one of the following: a first matrix, where the first matrix is for suppressing the cross-link interference of the first network device to the second network device; indication information of the first matrix, where the indication information of the first matrix is for determining the first matrix; and a first set of zenith and azimuth angles, where the first set of zenith and azimuth angles is for suppressing cross-link interference between the first network device and the second network device.

Optionally, the third information may further include a first quantity of layers and/or a first quantity. The first quantity of layers includes a quantity of columns of the first matrix, the first quantity includes a quantity of elements included in the first set of zenith and azimuth angles, and one element in the first set of zenith and azimuth angles includes one zenith angle and one azimuth angle.

In a possible implementation, if the first information includes first indication information, and the first indication information indicates that a frequency band in which the third information is reported is a subband, the third information may include N first matrices and/or indication information of N first matrices, where each of the first matrices corresponds to one subband, indication information of each of the first matrices corresponds to one subband, and N is a positive integer less than or equal to a quantity of subbands.

With reference to the second aspect, in some implementations of the second aspect, the third information further includes first request information, and the first request information is for requesting to suppress the cross-link interference of the first network device to the second network device.

With reference to the second aspect, in some implementations of the second aspect, the method further includes: The second network device sends first receive power and/or a first path loss to the first network device, where the first receive power is receive power at which the second network device receives the first signal, and the first path loss is a path loss from the first network device to the second network device. The first network device determines whether to suppress the cross-link interference of the first network device to the second network device.

With reference to the second aspect, in some implementations of the second aspect, the first information further indicates that the third information includes at least one of the following: the first matrix, where the first matrix is for suppressing the cross-link interference of the first network device to the second network device; the indication information of the first matrix, where the indication information of the first matrix is for determining the first matrix; the first set of zenith and azimuth angles, where the first set of zenith and azimuth angles is for suppressing the cross-link interference between the first network device and the second network device; the first quantity of layers, where the first quantity of layers is the quantity of columns of the first matrix; the first quantity, where the first quantity is the quantity of elements included in the first set of zenith and azimuth angles, and one element in the first set of zenith and azimuth angles includes one zenith angle and one azimuth angle; and the first request information, where the first request information is for requesting to suppress the cross-link interference of the first network device to the second network device.

With reference to the second aspect, in some implementations of the second aspect, the first information includes second indication information, and the second indication information indicates the first quantity of layers and/or the first quantity.

With reference to the second aspect, in some implementations of the second aspect, the second information includes transmit power of the first signal on one frequency unit and/or start time of the first signal.

With reference to the second aspect, in some implementations of the second aspect, the method further includes: The second network device receives first configuration information from the first network device, where the first configuration information is for configuring a first reporting setting, and the first reporting setting is used by the second network device to report the third information.

With reference to the second aspect, in some implementations of the second aspect, the method further includes: The second network device sends fourth information to the first network device, where the fourth information indicates the first network device to modify the first measurement resource. The second network device receives fifth information from the first network device, where the fifth information indicates a modified first measurement resource.

With reference to the second aspect, in some implementations of the second aspect, the fourth information includes a parameter that is recommended or not recommended by the second network device.

According to a third aspect, a communication method is provided. The method may be performed by a network device, or may be performed by a component (for example, a chip or a circuit) of the network device. This is not limited. For ease of description, the following uses an example in which the method is performed by the network device for description.

The method includes: A first network device receives first information from a third network device, where the first information indicates a first sending resource, and the first sending resource is a resource used by the first network device to send a first signal to a second network device. The first network device sends the first signal to the second network device. The first network device receives fourth information from the second network device, where the fourth information is for suppressing cross-link interference of the first network device to the second network device, and the fourth information is determined based on the first signal.

With reference to the third aspect, in some implementations of the third aspect, the fourth information includes at least one of the following: a first matrix, where the first matrix is for suppressing the cross-link interference of the first network device to the second network device; indication information of the first matrix, where the indication information of the first matrix is for determining the first matrix; and a first set of zenith and azimuth angles, where the first set of zenith and azimuth angles is for suppressing cross-link interference between the first network device and the second network device.

Optionally, the fourth information may further include a first quantity of layers and/or a first quantity. The first quantity of layers includes a quantity of columns of the first matrix, the first quantity includes a quantity of elements included in the first set of zenith and azimuth angles, and one element in the first set of zenith and azimuth angles includes one zenith angle and one azimuth angle.

In a possible implementation, if a frequency band in which the fourth information is reported is a subband, the fourth information may include at least one of the following: N first matrices and/or indication information of the N first matrices, where each of the first matrices corresponds to one subband, indication information of each of the first matrices corresponds to one subband, and N is a positive integer less than or equal to a quantity of subbands.

With reference to the third aspect, in some implementations of the third aspect, the fourth information further includes first request information, and the first request information is for requesting to suppress the cross-link interference of the first network device to the second network device.

With reference to the third aspect, in some implementations of the third aspect, the method further includes: The first network device receives first receive power and/or a first path loss from the second network device, where the first receive power is receive power at which the second network device receives the first signal, and the first path loss is a path loss from the first network device to the second network device. The first network device determines whether to suppress the cross-link interference of the first network device to the second network device.

With reference to the third aspect, in some implementations of the third aspect, the method further includes: The first network device sends a second signal to a terminal device based on the fourth information.

With reference to the third aspect, in some implementations of the third aspect, the method further includes: The first network device receives sixth information from the third network device, where the sixth information indicates a modified first sending resource, the sixth information is determined after the third network device receives fifth information from the second network device, and the fifth information indicates the third network device to modify a first measurement resource.

According to a fourth aspect, a communication method is provided. The method may be performed by a network device, or may be performed by a component (for example, a chip or a circuit) of the network device. This is not limited. For ease of description, the following uses an example in which the method is performed by the network device for description.

The method may include: A second network device receives second information and third information from a third network device. The second information indicates the second network device to report fourth information to a first network device, and the fourth information is for suppressing cross-link interference of the first network device to the second network device. The third information is for configuring a first measurement resource, the first measurement resource is used by the second network device to receive a first signal, and the first signal is for determining the third information. The second network device receives the first signal from the first network device. The second network device sends the fourth information to the first network device.

With reference to the fourth aspect, in some implementations of the fourth aspect, the fourth information includes at least one of the following: a first matrix, where the first matrix is for suppressing the cross-link interference of the first network device to the second network device; indication information of the first matrix, where the indication information of the first matrix is for determining the first matrix; and a first set of zenith and azimuth angles, where the first set of zenith and azimuth angles is for suppressing cross-link interference between the first network device and the second network device.

Optionally, the fourth information may further include a first quantity of layers and/or a first quantity. The first quantity of layers includes a quantity of columns of the first matrix, the first quantity includes a quantity of elements included in the first set of zenith and azimuth angles, and one element in the first set of zenith and azimuth angles includes one zenith angle and one azimuth angle.

In a possible implementation, if the second information includes first indication information, and the first indication information indicates that a frequency band in which the fourth information is reported is a subband, the fourth information may include N first matrices and/or indication information of N first matrices, where each of the first matrices corresponds to one subband, indication information of each of the first matrices corresponds to one subband, and N is a positive integer less than or equal to a quantity of subbands.

With reference to the fourth aspect, in some implementations of the fourth aspect, the fourth information further includes first request information, and the first request information is for requesting to suppress the cross-link interference of the first network device to the second network device.

With reference to the fourth aspect, in some implementations of the fourth aspect, the method further includes: The second network device sends first receive power and/or a first path loss to the first network device, where the first receive power is receive power at which the second network device receives the first signal, and the first path loss is a path loss from the first network device to the second network device. The first network device determines whether to suppress the cross-link interference of the first network device to the second network device.

With reference to the fourth aspect, in some implementations of the fourth aspect, the second information further indicates that the fourth information includes at least one of the following: the first matrix, where the first matrix is for suppressing the cross-link interference of the first network device to the second network device; the indication information of the first matrix, where the indication information of the first matrix is for determining the first matrix; the first set of zenith and azimuth angles, where the first set of zenith and azimuth angles is for suppressing the cross-link interference between the first network device and the second network device; the first quantity of layers, where the first quantity of layers is the quantity of columns of the first matrix; the first quantity, where the first quantity is the quantity of elements included in the first set of zenith and azimuth angles, and one element in the first set of zenith and azimuth angles includes one zenith angle and one azimuth angle; and the first request information, where the first request information is for requesting to suppress the cross-link interference of the first network device to the second network device.

With reference to the fourth aspect, in some implementations of the fourth aspect, the second information includes second indication information, and the second indication information indicates the first quantity of layers and/or the first quantity.

With reference to the fourth aspect, in some implementations of the fourth aspect, the third information includes transmit power of the first signal on one frequency unit and/or start time of the first signal.

With reference to the fourth aspect, in some implementations of the fourth aspect, the method further includes: The second network device receives first configuration information from the third network device, where the first configuration information is for configuring a first reporting setting, and the first reporting setting is used by the second network device to report the fourth information to the first network device.

With reference to the fourth aspect, in some implementations of the fourth aspect, the method further includes: The second network device sends fifth information to the third network device, where the fifth information indicates the first network device to modify the first measurement resource. The second network device receives seventh information from the third network device, where the seventh information indicates a modified first measurement resource.

With reference to the fourth aspect, in some implementations of the fourth aspect, the fifth information includes a parameter that is recommended or not recommended by the second network device.

According to a fifth aspect, a communication method is provided. The method may be performed by a network device, or may be performed by a component (for example, a chip or a circuit) of the network device. This is not limited. For ease of description, the following uses an example in which the method is performed by the network device for description.

The method may include: A third network device sends first information to a first network device, where the first information indicates a first sending resource, and the first sending resource is a resource used by the first network device to send a first signal to a second network device. The third network device sends second information to the second network device, where the second information indicates the second network device to report fourth information to the first network device, the fourth information is for suppressing cross-link interference of the first network device to the second network device, and the first signal is for determining the fourth information. The third network device sends third information to the second network device, where the third information indicates a first measurement resource, and the first measurement resource is a resource used by the second network device to receive and measure the first signal.

With reference to the fifth aspect, in some implementations of the fifth aspect, the fourth information includes at least one of the following: a first matrix, where the first matrix is for suppressing the cross-link interference of the first network device to the second network device; indication information of the first matrix, where the indication information of the first matrix is for determining the first matrix; and a first set of zenith and azimuth angles, where the first set of zenith and azimuth angles is for suppressing cross-link interference between the first network device and the second network device.

Optionally, the fourth information may further include a first quantity of layers and/or a first quantity. The first quantity of layers includes a quantity of columns of the first matrix, the first quantity includes a quantity of elements included in the first set of zenith and azimuth angles, and one element in the first set of zenith and azimuth angles includes one zenith angle and one azimuth angle.

In a possible implementation, if the second information includes first indication information, and the first indication information indicates that a frequency band in which the fourth information is reported is a subband, the fourth information may include N first matrices and/or indication information of N first matrices, where each of the first matrices corresponds to one subband, indication information of each of the first matrices corresponds to one subband, and N is a positive integer less than or equal to a quantity of subbands.

With reference to the fifth aspect, in some implementations of the fifth aspect, the fourth information further includes first request information, and the first request information is for requesting to suppress the cross-link interference of the first network device to the second network device.

With reference to the fifth aspect, in some implementations of the fifth aspect, the second information further indicates that the fourth information includes at least one of the following: the first matrix, where the first matrix is for suppressing the cross-link interference of the first network device to the second network device; the indication information of the first matrix, where the indication information of the first matrix is for determining the first matrix; the first set of zenith and azimuth angles, where the first set of zenith and azimuth angles is for suppressing the cross-link interference between the first network device and the second network device; the first quantity of layers, where the first quantity of layers is the quantity of columns of the first matrix; the first quantity, where the first quantity is the quantity of elements included in the first set of zenith and azimuth angles, and one element in the first set of zenith and azimuth angles includes one zenith angle and one azimuth angle; and the first request information, where the first request information is for requesting to suppress the cross-link interference of the first network device to the second network device.

With reference to the fifth aspect, in some implementations of the fifth aspect, the second information includes second indication information, and the second indication information indicates the first quantity of layers and/or the first quantity.

With reference to the fifth aspect, in some implementations of the fifth aspect, the third information includes transmit power of the first signal on one frequency unit and/or start time of the first signal.

With reference to the fifth aspect, in some implementations of the fifth aspect, the method further includes: The third network device sends first configuration information to the second network device, where the first configuration information is for configuring a first reporting setting, and the first reporting setting is used by the second network device to report the fourth information to the first network device.

With reference to the fifth aspect, in some implementations of the fifth aspect, the method further includes: The third network device receives fifth information from the second network device, where the fifth information indicates the first network device to modify the first measurement resource. The third network device sends sixth information to the first network device, where the sixth information indicates a modified first sending resource. The third network device sends seventh information to the second network device, where the seventh information indicates a modified first measurement resource.

With reference to the fifth aspect, in some implementations of the fifth aspect, the fifth information includes a parameter that is recommended or not recommended by the second network device.

According to a sixth aspect, a communication system is provided. The communication system includes a first network device and a second network device, where the first network device performs the action of the first network device in the first aspect or the second aspect and any one of the possible implementations of the first aspect or the second aspect, and the second network device performs the action of the second network device in the first aspect or the second aspect and any one of the possible implementations of the first aspect or the second aspect.

According to a seventh aspect, a communication system is provided. The communication system includes a first network device, a second network device, and a third network device, where the first network device performs the actions of the first network device in any one of the third aspect to the fifth aspect and any one of the possible implementations of the third aspect to the fifth aspect, the second network device performs the actions of the second network device in any one of the third aspect to the fifth aspect and any one of the possible implementations of the third aspect to the fifth aspect, and the third network device performs the actions of the third network device in any one of the third aspect to the fifth aspect and any one of the possible implementations of the third aspect to the fifth aspect.

According to an eighth aspect, a communication apparatus is provided. The apparatus is configured to perform the methods provided in the first aspect to the fifth aspect. Specifically, the apparatus may include a unit and/or a module configured to perform the method according to the first aspect to the fifth aspect and any one of the possible implementations of the first aspect to the fifth aspect, for example, a processing unit and/or a communication unit.

In an implementation, the apparatus is a network device. When the apparatus is the network device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in a network device. When the apparatus is the chip, the chip system, or the circuit used in the network device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a ninth aspect, a communication apparatus is provided. The apparatus includes: at least one processor, where the at least one processor is coupled to at least one memory, the at least one memory is configured to store a computer program or instructions, and the at least one processor is configured to invoke the computer program or the instructions from the at least one memory and run the computer program or the instructions, to cause the communication apparatus to perform the method according to the first aspect to the fifth aspect and any one of the possible implementations of the first aspect to the fifth aspect.

In an implementation, the apparatus is a network device.

In another implementation, the apparatus is a chip, a chip system, or a circuit used in a network device.

According to a tenth aspect, a processor is provided, configured to perform the method provided in the foregoing aspects.

Operations such as sending and obtaining/receiving related to the processor, unless otherwise specified or provided that the operations do not contradict actual functions or internal logic of the operations in related descriptions, may be understood as operations such as output, receiving, or input of the processor, or may be understood as sending and receiving operations performed by a radio frequency circuit and an antenna. This is not limited in this application.

According to an eleventh aspect, a computer-readable storage medium is provided. The computer-readable storage medium stores program code executed by a device, and the program code is used to perform the method according to any one of the first aspect to the fifth aspect and any one of the possible implementations of the first aspect to the fifth aspect.

According to a twelfth aspect, a computer program product including instructions is provided. When the computer program product is run on a computer, the computer is caused to perform the method according to any one of the first aspect to the fifth aspect and any one of the possible implementations of the first aspect to the fifth aspect.

According to a thirteenth aspect, a chip is provided. The chip includes a processor and a communication interface. The processor reads, through the communication interface, instructions stored in a memory, to perform the method according to any one of the first aspect to the fifth aspect and any one of the possible implementations of the first aspect to the fifth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to any one of the first aspect to the fifth aspect and any one of the possible implementations of the first aspect to the fifth aspect.

For descriptions of the beneficial effect of any one of the second aspect to the thirteenth aspect, refer to the descriptions of the beneficial effect of the first aspect.

### BRIEF DESCRIPTION OF DRAWINGS

FIG. 1 is a diagram of a communication system according to an embodiment of this application;
FIG. 2 is a diagram of time domain and frequency domain for subband full duplex;
FIG. 3 is a schematic flowchart of a communication method according to an embodiment of this application;
FIG. 4 is a schematic flowchart of another communication method according to an embodiment of this application;
FIG. 5 is a block diagram of a communication apparatus 500 according to an embodiment of this application; and
FIG. 6 is a block diagram of a communication apparatus 600 according to an embodiment of this application.

### DESCRIPTION OF EMBODIMENTS

The following describes the technical solutions in embodiments of this application with reference to the accompanying drawings.

The technical solutions in embodiments of this application may be applied to various communication systems, for example, a 5th generation (5th generation, 5G) communication system, a new radio (new radio, NR) communication system, a long term evolution (long term evolution, LTE) communication system, an internet of things (internet of things, IoT), wireless-fidelity (wireless-fidelity, Wi-Fi), 3rd generation partnership project (3rd generation partnership project, 3GPP)-related wireless communication, or other wireless communication that may occur in the future.

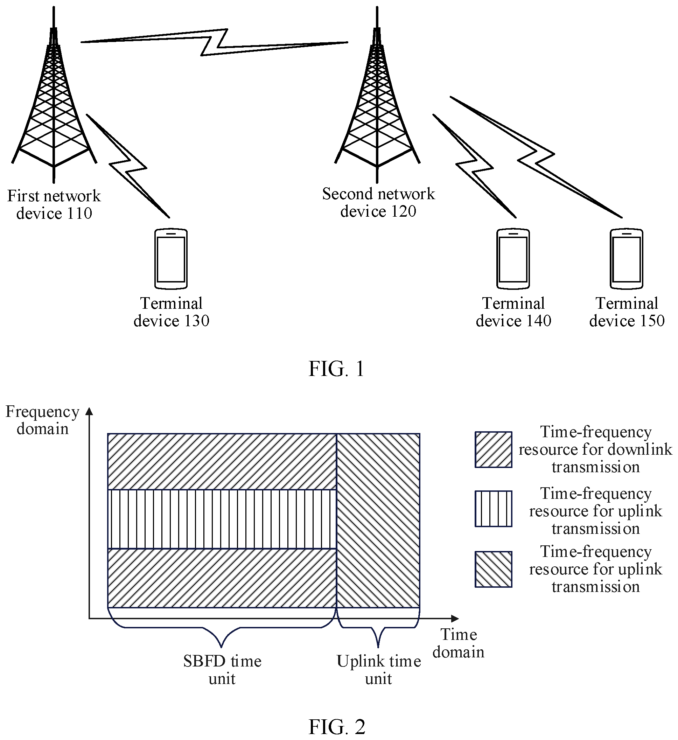

FIG. 1 is a diagram of a communication system according to an embodiment of this application. A communication system 100 includes a plurality of network devices, for example, a first network device 110 and a second network device 120 shown in FIG. 1. Each network device may communicate with at least one terminal device through a wireless link, to exchange information. For example, the first network device 110 and a terminal device 130 shown in FIG. 1 communicate with each other through a wireless link, and the second network device 120, a terminal device 140, and a terminal device 150 communicate with each other through a wireless link. Network devices may also communicate with each other through a wired or wireless link, to exchange information. For example, the first network device 110 and the second network device 120 shown in FIG. 1 may communicate with each other through a wireless link, or may communicate with each other through an Xn or F1 interface in a wired manner. It may be understood that, the network device and the terminal device may also be referred to as communication devices.

The network device is a network-side device that has a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a next generation NodeB (next generation NodeB, gNB) in a 5G mobile communication system, a subsequent evolved base station in the 3GPP, a transmission reception point (transmission reception point, TRP), an access node in a Wi-Fi system, a wireless relay node, a wireless backhaul node, or the like. In communication systems in which different radio access technologies (radio access technologies, RATs) are used, names of devices functioning as the base station may be different. For example, the device may be referred to as an eNB or an eNodeB in an LTE system, and may be referred to as a gNB in a 5G system or an NR system. A specific name of the base station is not limited in this application. The network device may include one or more co-location or non-co-location transmission reception points. For another example, the network device may include one or more central units (central units, CUs), one or more distributed units (distributed units, DUs), or one or more CUs and one or more DUs. For example, functions of the CU may be implemented by one entity or different entities. For example, the functions of the CU are further divided. In other words, a control plane and a user plane are separated and implemented by different entities, which are respectively a CU-control plane entity (that is, a CU-CP entity) and a CU-user plane entity (that is, a CU-UP entity). The CU-CP entity and the CU-UP entity may be coupled to the DU, to jointly complete a function of an access network device. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. In this way, some functions of a radio access network device may be implemented by a plurality of network function entities. These network function entities may be network elements in a hardware device, or may be software functions run on dedicated hardware, or may be virtualized functions instantiated on a platform (for example, a cloud platform). The network device may further include an active antenna unit (active antenna unit, AAU for short). The AAU implements some processing functions of the physical layer, and functions related to radio frequency processing and an active antenna. Information at the RRC layer is eventually converted into information at the PHY layer, or is converted from information at the PHY layer. Therefore, in this architecture, high-layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in the radio access network (radio access network, RAN), or the CU may be classified as a network device in a core network (core network, CN). This is not limited in this application. For another example, in a vehicle-to-everything (vehicle-to-everything, V2X) technology, the access network device may be a road side unit (road side unit, RSU). A plurality of access network devices in a communication system may be base stations of a same type, or may be base stations of different types. The base station may communicate with the terminal device, or may communicate with the terminal device via a relay station. In embodiments of this application, an apparatus configured to implement a function of the network device may be the network device, or may be an apparatus that can support the network device in implementing the function, for example, a chip system, or a combined device or component that can implement a function of the access network device. The apparatus may be installed in the network device. In embodiments of this application, the chip system may include a chip, or may include a chip and another discrete device.

The terminal device is a user-side device that has a wireless transceiver function, ad may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect persons, objects, machines, and the like, and may be widely used in various scenarios, for example, scenarios like cellular communication, device-to-device (device-to-device, D2D) communication, V2X communication, machine-to-machine/machine type communication (machine-to-machine/machine type communication, M2M/MTC) communication, an internet of things, virtual reality (virtual reality, VR), augmented reality (augmented reality, AR), industrial control (industrial control), self-driving (self-driving), remote medical (remote medical), a smart grid (smart grid), smart furniture, a smart office, smart wearable, smart transportation, a smart city (smart city), an uncrewed aerial vehicle, and a robot. For example, the terminal device may be a handheld terminal in the cellular communication, a communication device in D2D communication, an internet-of-things device in the MTC, a surveillance camera in the smart transportation and the smart city, a communication device on the uncrewed aerial vehicle, or the like. Sometimes, the terminal device may be referred to as user equipment (user equipment, UE), a user terminal, a user apparatus, a subscriber unit, a subscriber station, a terminal, an access terminal, an access station, a UE station, a remote station, a mobile device, a wireless communication device, or the like. In embodiments of this application, an apparatus configured to implement a function of the terminal device may be a terminal device, or may be an apparatus that can support the terminal device in implementing the function, for example, a chip system, or a combined device or component that can implement a function of the terminal device. The apparatus may be installed in the terminal device.

For ease of understanding of embodiments of this application, concepts and related procedures in this application are described first.
1. SBFD: In the SBFD solution, one carrier or one bandwidth part (bandwidth part, BWP) is divided into a plurality of subbands, and transmission directions of different subbands may be different. In other words, one carrier includes a first subband and a second subband, and transmission directions of the first subband and the second subband are different. It should be noted that the first subband and the second subband are two types of subbands with different transmission directions, and it does not mean that one carrier includes only two subbands. For example, one carrier includes a subband #1 and a subband #2, where transmission directions of the subband #1 and the subband #2 are different. Alternatively, one carrier includes a subband #1, a subband #2, and a subband #3, where transmission directions of the subband #1 and the subband #3 are the same, and transmission directions of the subband #1 and the subband #2 are different.
2. SBFD time unit: Frequency resources in a SBFD time unit include an uplink frequency resource and a downlink frequency resource, where the uplink frequency resource is used for uplink transmission, and the downlink frequency resource is used for downlink transmission. For example, time-frequency division for a typical SBFD solution is shown in FIG. 2, in which a horizontal axis represents time domain, and a vertical axis represents frequency domain. In FIG. 2, two rectangles filled with left-slash shading represent a group of time-frequency resources for downlink transmission, a rectangle filled with vertical-bar shading represents a group of time-frequency resources for uplink transmission, and time domain resources in a time domain range occupied by the three blocks of time-frequency resources are referred to as an SBFD time unit.
3. CBF: also known as beam nulling (beam nulling). CBF is a technique in which downlink beams' null (null) of a network device is steered to other network devices, to suppress CLI caused by downlink signals of the network device to the other network devices.

To implement CBF, the network device needs to obtain channel information (or other related information) between the network device and other network devices, which requires cooperation between the network devices. For example, the network devices perform channel measurement with each other, and report the corresponding measurement results.

However, current network devices cannot adequately support inter-device measurement and reporting. For example, the network devices are not provided with necessary interaction information ensuring that measurements between devices are not duplicated and that no required measurements are omitted. For another example, the network devices are not provided with necessary reporting information (serving as CBF input parameters) to support CBF. Consequently, network devices cannot efficiently perform CBF, or even cannot perform CBF.

In view of this, this application provides an uplink transmission method, to effectively resolve the foregoing technical problems. The following describes in detail the method provided in this application.

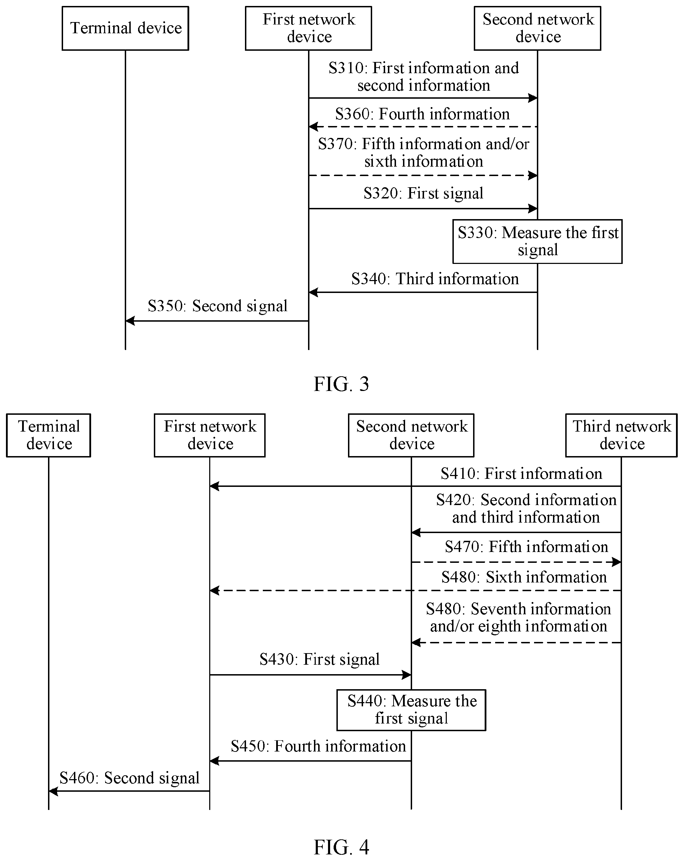

FIG. 3 is a schematic flowchart of a communication method according to an embodiment of this application.

S310: A first network device sends first information and second information to a second network device.

The first information indicates the second network device to report third information to the first network device, the third information is for suppressing cross-link interference of the first network device to the second network device, the third information includes a first measurement result, and the first measurement result is a measurement result of measuring, by the second network device, a first signal sent by the first network device.

In a possible implementation, the first information may indicate a measurement quantity that is reported by the second network device to the first network device. In other words, the first information may indicate that the third information includes at least one of the following:
1. A channel matrix: The channel matrix is a channel matrix between the first network device and the second network device. It should be understood that the channel matrix is a two-dimensional matrix, a row represents an antenna port of the second network device, and a column represents an antenna port of the first network device.
2. First matrix: The first matrix is for suppressing the cross-link interference of the first network device to the second network device. For example, the first matrix may be a CBF matrix.

Optionally, the first matrix includes one or more columns of a right-singular matrix obtained by performing SVD decomposition on the channel matrix.

Optionally, the first matrix includes one or more columns that correspond to one or more largest singular values (or eigenvalues corresponding to the singular values) in the right-singular matrix obtained by performing SVD decomposition on the channel matrix.

A row of the first matrix represents the antenna port of the first network device.

3. Indication information of the first matrix: The indication information of the first matrix is for determining the first matrix. For example, the indication information of the first matrix may include an index of the first matrix, and the corresponding first matrix may be determined based on the index. The indication information of the first matrix is obtained through quantization based on the first matrix. A possible quantization method is to determine the indication information of the first matrix by using a downlink codebook.

4. First set of zenith and azimuth angles: The first set of zenith and azimuth angles is for suppressing the cross-link interference of the first network device to the second network device, each first set of zenith and azimuth angles includes at least one element, and each element includes one zenith angle and one azimuth angle.

Optionally, the zenith angle and the azimuth angle are a zenith angle of departure (zenith angle of departure, ZOD) and an azimuth angle of departure (azimuth angle of departure, AOD) that are of one or more paths from the first network device to the second network device and that are in a local coordinate system (local coordinate system, LCS) of the first network device.

Optionally, the first set of zenith and azimuth angles includes one or more elements that include a ZOD and an AOD that are of one or more strongest paths from the first network device to the second network device and that are in the LCS of the first network device.

Optionally, the zenith angle and the azimuth angle are determined based on geographical locations (for example, three-dimensional coordinates (longitude, latitude, and altitude)) of the first network device and the second network device.

Optionally, the zenith angle and the azimuth angle are determined based on the channel matrix.

5. First quantity of layers: The first quantity of layers is a quantity of columns of the first matrix. If the first quantity of layers is 1, the first matrix is a one-dimensional matrix. If the first quantity of layers is greater than 1, the first matrix is a two-dimensional matrix.

For example, a candidate value of the first quantity of layers is 1, 2, or 4.

Optionally, the first quantity of layers is determined by the second network device by measuring the first signal. For example, the second network device estimates an appropriate first quantity of layers, to minimize impact caused by the CLI of the first network device on the second network device, and minimize a downlink performance loss caused by CLI suppression performed by the first network device.

6. First quantity: The first quantity is a quantity of the elements included in the first set of zenith and azimuth angles, and one element in the first set of zenith and azimuth angles includes one zenith angle and one azimuth angle.

For example, a candidate value of the first quantity is 1, 2, or 4.

It should be understood that the first quantity and the first quantity of layers have similar functions, but serve different objects. The first quantity is used for the first set of zenith and azimuth angles, and the first quantity of layers is used for the first matrix.

7. First request information: The first request information is for requesting whether to suppress the cross-link interference of the first network device to the second network device. For example, the first request information includes CLI suppression request signaling. The second network device requests the first network device to perform or not to perform the CLI suppression on the second network device.

Optionally, the CLI suppression request signaling occupies a 1-bit resource. "0" indicates that the first network device does not perform the CLI suppression on the second network device, and "1" indicates that the first network device performs the CLI suppression on the second network device. Alternatively, "0" indicates that the first network device performs the CLI suppression on the second network device, and "1" indicates that the first network device does not perform the CLI suppression on the second network device.

8. First receive power and/or first path loss: The first receive power is receive power at which the second network device receives the first signal. For example, the first signal is a CSI-RS reference signal, and the first receive power is CSI-RS RSRP. The first path loss is a path loss from the first network device to the second network device.

The first receive power and/or the first path loss may be used to determine whether to suppress the cross-link interference of the first network device to the second network device.

For example, when the first receive power is greater than a first threshold, or the first path loss is less than a second threshold, the cross-link interference of the first network device to the second network device is suppressed. On the contrary, if the first receive power is less than a first threshold, or the first path loss is greater than a second threshold, the cross-link interference of the first network device to the second network device is not suppressed.

The determining action may be performed by the first network device, or may be performed by the second network device. If the determining action is performed by the first network device, the first information needs to indicate that the third information includes the first receive power and/or the first path loss. If the determining action is performed by the second network device, the first information needs to indicate that the third information includes the first request information.

It should be noted that the first quantity of layers and the first quantity may be sent by the first network device to the second network device. For example, the first information includes second indication information, and the second indication information indicates the first quantity of layers and/or the first quantity.

In this embodiment of this application, if the first network device does not indicate a specific value of the first quantity of layers and/or a specific value of the first quantity to the second network device, the second network device may autonomously determine the specific value of the first quantity of layers and/or the specific value of the first quantity. If the first network device indicates a specific value of the first quantity of layers and/or a specific value of the first quantity to the second network device, the second network device may determine the first matrix or the indication information of the first matrix based on the specific value of the first quantity of layers, and determine the first set of zenith and azimuth angles based on the specific value of the first quantity.

A reporting quantity that needs to be included in the third information is indicated by the first information, so that it can be ensured that the first network device can suppress the cross-link interference based on the third information, thereby improving communication reliability. In addition, via prior indication, the second network device can be prevented from sending unnecessary information, thereby improving communication efficiency.

In this embodiment of this application, the first information may include first indication information. The first indication information indicates a frequency domain configuration for reporting the third information, where the frequency domain configuration includes a frequency band in which the third information is reported, and the frequency band in which the third information is reported may be a wideband or a subband.

In a possible implementation, if the first indication information indicates that the frequency band in which the third information is reported is a subband, the first indication information may further indicate a subband that needs to be reported. In other words, the first network device may not need the second network device to report measurement results for all subbands, and the first network device indicates, based on the first indication information, a specific subband that needs to be reported. There may be one or more subbands that need to be reported.

For example, the first indication information may include a bitmap (bitmap). The bitmap may indicate the subband that needs to be reported. A right side of the bitmap shows a least significant bit, and a left side of the bitmap shows a most significant bit. Each bit in the bitmap corresponds to one subband. In the bitmap, "0" indicates that a subband corresponding to the bit does not need to be reported, and "1" indicates that a subband corresponding to the bit needs to be reported. For example, a quantity of subbands is 5, and a 5-bit bitmap corresponding to the subbands is 11001. Bits spanning from a least significant bit to a most significant bit in the bitmap sequentially correspond to subbands 1 to 5, and the bitmap indicates that the subbands 1, 4, and 5 need to be reported.

Further, the first indication information may further indicate a length of a subband and a quantity of subbands. For example, the first indication information may further indicate that the quantity of subbands is 5, and a length of each subband is 10 resource blocks (resource blocks, RBs).

In a possible implementation, the first network device may further send first configuration information to the second network device, where the first configuration information is for configuring a first reporting setting (reporting setting), and the first reporting setting is used by the second network device to report the third information. Particularly, the first configuration information may be included in the first information.

For example, the first reporting setting includes one or more of the following parameters:
1. Network device ID: The network device ID is an ID of a network device that configures the first reporting setting. For example, the network device ID in this embodiment is an ID of the first network device. It should be understood that only two network devices are used as an example in this embodiment. In practice, in addition to the first network device, another network device also configures a reporting setting for the second network device. To distinguish between reporting settings configured by different network devices, and to identify a specific network device to which the third information is fed back, a network device ID needs to be carried in a reporting setting. In other words, the second network device reports the third information only to a network device indicated by the network device ID in the first reporting setting.
2. Reporting setting ID: It should be understood that the network device ID and the reporting setting ID may uniquely identify one first reporting setting.
3. Measurement resource ID: The measurement resource ID indicates that the second network device obtains the first measurement result by measuring a first signal corresponding to a specific measurement resource. It should be understood that, in addition to the measurement resource ID, the network device ID in the first reporting setting further needs to be used, to jointly determine a first measurement resource.
4. Time-domain behavior of reporting the third information:

If the third information is periodically reported, the first reporting setting includes a reporting periodicity, and the second network device periodically reports the first measurement result based on the reporting periodicity.

The first reporting setting takes effect immediately after being configured. It should be understood that "taking effect immediately" means that the second network device immediately reports the third information based on the first reporting setting.

If the third information is reported in a semi-persistent manner, the first reporting setting includes a reporting periodicity and first signaling, and the first signaling activates or deactivates the first reporting setting. After the first reporting setting is activated, the second network device periodically reports the third information based on the reporting periodicity. After the first reporting setting is deactivated, the second network device does not report the third information.

The first signaling includes activation/deactivation information. For example, the activation/deactivation information occupies a 1-bit resource, where "0" represents deactivation and "1" represents activation, or "0" represents activation and "1" represents deactivation.

The first signaling further includes the reporting setting ID, and the reporting setting ID indicates an activated or deactivated first reporting setting.

If the third information is aperiodically reported, the first reporting setting includes second signaling, where the second signaling is for triggering reporting. After reporting is triggered, the second network device reports the third information once.

In a possible implementation, the first reporting setting may alternatively include information indicating that the third information includes a parameter.

In a possible implementation, the first network device may indicate a plurality of first reporting settings. For example, the first network device indicates a first reporting setting set, and the first reporting setting set includes at least one first reporting setting. For example, the first network device indicates a plurality of first reporting setting sets.

In this embodiment of this application, the second information indicates a first measurement resource, the first measurement resource is a resource on which the second network device receives and measures the first signal, and the first signal is a reference signal used for measurement between network devices. For example, the first signal is a CSI-RS.

In a possible implementation, the first network device sends the first signal based on the first measurement resource.

Optionally, the first measurement resource includes one or more of the following parameters:
1. Network device ID: The network device ID is an ID of a network device that configures the first measurement resource. The network device ID in this embodiment is the ID of the first network device. It should be understood that only two network devices are used as an example in this embodiment. In practice, in addition to the first network device, another network device also configures a measurement resource for the second network device. To distinguish between measurement resources configured by different network devices, a network device ID needs to be carried in a measurement resource.
2. Measurement resource ID: It should be understood that the network device ID and the measurement resource ID may uniquely identify one first measurement resource.
3. Time domain resource occupied by the first signal: In this embodiment of this application, the time domain resource may include at least one of the following: a symbol location of the first signal in one slot, a periodicity of the first signal, an offset of the first signal, start time of the first signal, and a time-domain behavior of the first signal.

For example, the symbol location of the first signal in one slot is an OFDM symbol index of the first signal in one slot, and may be indicated by a field firstOFDMSymbolInTimeDomain and/or a field firstOFDMSymbolInTimeDomain2 in an RRC information element CSI-RS-ResourceMapping. The periodicity of the first signal and the offset of the first signal may be indicated by a field CSI-ResourcePeriodicityAndOffset in an RRC information element NZP-CSI-RS-Resource.

The start time of the first signal is absolute time at which the first signal is sent for the first time. For example, the start time of the first signal is UTC time, in a unit of second, millisecond, microsecond, nanosecond, or the like.

The time-domain behavior of the first signal includes: periodically receiving the first signal, receiving the first signal in a semi-persistent manner, and aperiodically receiving the first signal.

The second network device may periodically receive the first signal. For example, the second network device periodically receives and measures the first signal. Optionally, the first network device periodically sends the first signal. The first resource takes effect immediately after being configured. It should be understood that "taking effect immediately" means that the second network device immediately receives and measures the first signal based on the first measurement resource.

The second network device may further receive the first signal in a semi-persistent manner. For example, the second information includes third signaling, and the third signaling is for activating or deactivating the first measurement resource. After the first measurement resource is activated, the second network device periodically receives and measures the first signal. Optionally, the first network device periodically sends the first signal. After the first measurement resource is deactivated, the second network device does not receive or measure the first signal. Optionally, the first network device does not send the first signal.

The third signaling may include activation/deactivation information, and the activation/deactivation information occupies a 1-bit resource. For example, "0" represents deactivation and "1" represents activation, or "0" represents activation and "1" represents deactivation.

The third signaling may further include the measurement resource ID, and the measurement resource ID indicates an activated or deactivated first measurement resource.

The second network device may further aperiodically receive the first signal. For example, the first information includes fourth signaling, and the fourth signaling triggers the first measurement resource. After the first measurement resource is triggered, the second network device receives and measures the first signal once. Optionally, the first network device sends the first signal once.

In a possible implementation, the fourth signaling includes the start time of the first signal. For example, the start time of the first signal is the UTC time, in a unit of second, millisecond, microsecond, nanosecond, or the like.

4. Frequency domain resource occupied by the first signal: The time domain resource in this embodiment of this application may include at least one of the following: a resource element (resource element, RE) location of the first signal in one RB, a frequency domain range of the first signal, a frequency density of the first signal, a sequence resource, a space domain resource, and a power domain resource.

The frequency domain range of the first signal includes a start RB and a quantity of included RBs. For example, the frequency domain range of the first signal is indicated by a field freqBand in the RRC information element CSI-RS-ResourceMapping, and includes the start RB and a quantity N of RBs. In other words, frequency bandwidth used by the CSI-RS is N consecutive RBs starting from the start RB. For the start RB and the quantity N of RBs, refer to a bandwidth part (Bandwidth Part, BWP).

The frequency density of the first signal is a density of the first signal in frequency domain. For example, the frequency density of the first signal is given by a field density in the RRC information element CSI-RS-ResourceMapping. It should be understood that, within configured bandwidth, a first signal may be configured for every RB, and this pattern may be referred to as the frequency density of 1 for the first signal. Alternatively, a first signal may be configured for every other RB, and this pattern may be referred to as the frequency density of 0.5 for the first signal.

The sequence resource may include sequence scrambling information. For example, the sequence scrambling information may be determined based on scramblingID or sequenceGenerationConfig in a higher-layer parameter (higher-layer parameter).

The space domain resource includes a quantity of ports of the first signal and a code division multiplexing (code division multiplexing, CDM) type of the first signal. For example, the quantity of ports of the first signal may be indicated by a field nrofPorts in the RRC information element CSI-RS-ResourceMapping, and the CDM type of the first signal may be indicated by a field cdm-Type in the RRC information element CSI-RS-ResourceMapping.

The power domain resource includes transmit power of the first signal on one frequency unit, and the transmit power of the first signal on one frequency unit is mainly used by the second network device to determine the loss in the path between the first network device and the second network device. For example, transmit power of the first signal on one RE is in a unit of dBm.

In a possible implementation, the second information may indicate a plurality of first measurement resources. For example, the second information may indicate a first measurement resource set, the first measurement resource set includes at least one first measurement resource, and the first information may further indicate a plurality of first measurement resource sets.

In a possible implementation, there is a specific relationship between the first measurement resource and the first reporting setting.

A first possible relationship is as follows: If the first reporting setting does not include one or more of the measurement resource ID, the time-domain behavior of reporting, or the reporting periodicity, the second network device measures the first signal corresponding to the first measurement resource that is configured, activated, or triggered based on the second information, and then determines the first measurement result based on the first information and reports the first measurement result to the first network device. In this solution, the time-domain behavior of reporting is consistent with a time-domain behavior of measurement. Specific descriptions are as follows.

When both a time-domain behavior of reporting and a time-domain behavior of measurement of the second network device are periodic behaviors, if the first measurement resource is a periodic resource, and the first reporting setting does not include the reporting periodicity, the second network device periodically reports the first measurement result based on a measurement periodicity; or if the first measurement resource is a periodic resource, and the first reporting setting includes the reporting periodicity, the second network device periodically reports the first measurement result based on the reporting periodicity.

It should be understood that measurement and reporting processes take effect immediately after the first measurement resource and the first reporting setting are configured.

When both a time-domain behavior of reporting and a time-domain behavior of measurement of the second network device are semi-persistent behaviors, if the first measurement resource is a semi-persistent resource, and the first reporting setting does not include the reporting periodicity, the second network device periodically reports the first measurement result based on a measurement periodicity; or if the first measurement resource is a semi-persistent resource, and the first reporting setting includes the reporting periodicity, the second network device periodically reports the first measurement result based on the reporting periodicity.

It should be understood that measurement and reporting processes take effect only after the first reporting setting is configured and the first measurement resource is activated. If the first reporting setting is configured, but the first measurement resource is deactivated, the second network device cancels processes of measuring and reporting the first signal corresponding to the first measurement resource.

When both a time-domain behavior of reporting and a time-domain behavior of measurement of the second network device are aperiodic behaviors, after the first reporting setting is configured and the first measurement resource is triggered, measurement and reporting processes take effect once.

A second possible relationship is as follows: The first reporting setting includes the measurement resource ID, the time-domain behavior of reporting, and the reporting periodicity (note: the reporting periodicity is not needed for aperiodic reporting).

When a time-domain behavior of reporting of the second network device is periodic reporting, the first measurement resource indicated by the measurement resource ID in the first reporting setting needs to be a periodic measurement resource. It should be understood that periodic reporting supports only periodic measurement.

Optionally, after the first reporting setting is configured by using the first configuration information, the second network device periodically measures the first signal corresponding to the first measurement resource indicated by the measurement resource ID in the first reporting setting, and periodically feeds back the first measurement result, where a measurement periodicity is indicated by a measurement periodicity in the first measurement resource, and a feedback periodicity is indicated by the reporting periodicity in the first reporting setting.

When a time-domain behavior of reporting of the second network device is semi-persistent reporting, the first measurement resource indicated by the measurement resource ID in the first reporting setting needs to be a periodic measurement resource or a semi-persistent measurement resource. It should be understood that semi-persistent reporting supports only periodic measurement and semi-persistent measurement.

Optionally, after the first reporting setting is activated by using the first configuration information, if the first measurement resource indicated by the measurement resource ID in the first reporting setting is a periodic resource, a behavior of the second network device is the same as the foregoing behavior of periodic reporting.

Optionally, after the first reporting setting is activated by using the first configuration information, if the first measurement resource indicated by the measurement resource ID in the first reporting setting is a semi-persistent resource, the measurement resource ID activates the first measurement resource, and the second network device periodically measures the first signal corresponding to the activated first measurement resource, and periodically feeds back the first measurement result. A measurement periodicity is indicated by a measurement periodicity in the first measurement resource, and a feedback periodicity is indicated by the reporting periodicity in the first reporting setting.

It should be understood that, in this solution, the first information does not need to include the first signaling to activate the first measurement resource, and this function is implemented by the measurement resource ID in the second reporting resource for replacement.

When a time-domain behavior of reporting of the second network device is aperiodic reporting, the first measurement resource indicated by the measurement resource ID in the first reporting setting may be a periodic measurement resource, a semi-persistent measurement resource, or an aperiodic measurement resource. It should be understood that aperiodic reporting supports periodic measurement, semi-persistent measurement, and aperiodic measurement.

Optionally, after the first reporting setting is triggered by using the first configuration information, if the first measurement resource indicated by the measurement resource ID in the first reporting setting is periodic, the second network device performs one measurement of the first signal corresponding to the first measurement resource indicated by the measurement resource ID in the first reporting resource, and feeds back the first measurement result once.

Optionally, after the first reporting setting is triggered by using the first configuration information, if the first measurement resource indicated by the measurement resource ID in the first reporting setting is a semi-persistent resource, the measurement resource ID activates the first measurement resource, and the second network device measures once the first signal corresponding to the activated first measurement resource, and feeds back the first measurement result once.

Optionally, after the first reporting setting is triggered by using the first configuration information, if the first measurement resource indicated by the measurement resource ID in the first reporting setting is an aperiodic resource, the measurement resource ID triggers the first measurement resource, and the second network device measures once the first signal corresponding to the triggered first measurement resource, and feeds back the first measurement result once.

It should be understood that, in this solution, the second information does not need to include the fourth signaling to trigger the first measurement resource, and this function is implemented by the measurement resource ID in the first reporting setting for replacement.

It should be understood that, more accurately, the "first measurement resource indicated by the measurement resource ID in the first reporting setting" should be a "first measurement resource indicated by the measurement resource ID and the network device ID in the first reporting setting".

It should be understood that a difference between the two relationships lies in the following: In the first possible relationship, the first measurement resource and the first reporting setting are coupled to each other. The first reporting setting does not indicate a measurement result that corresponds to a specific measurement resource and that needs to be reported, and the measurement result is indicated by the second information; and the first reporting setting does not need to carry a time-domain behavior, and complies with a time-domain behavior of the first measurement resource.

On the contrary, in the second possible relationship, the first measurement resource and the first reporting setting are decoupled from each other. The first reporting setting indicates a measurement result corresponding to a measurement resource that needs to be reported, and the measurement result does not need to be indicated by the second information. Behaviors of triggering and activating/deactivating the measurement resource are completed by using the first reporting setting. Time-domain behaviors of the first reporting setting and the first measurement resource are separately configured. Different measurement resources may correspond to different reporting quantities and frequency domain configurations of the reporting quantities.

S320: The first network device sends the first signal to the second network device.

The first signal is used for channel measurement. For example, the first signal may include a CSI-RS signal.

S330: The second network device measures the first signal, and determines the first measurement result.

S340: The second network device sends the third information to the first network device, where the third information includes the first measurement result.

If the frequency domain configuration that is in the first information and that is for reporting the third information is a wideband, content of the third information includes a measurement quantity corresponding to entire bandwidth, and the third information, as indicated by the first information, includes at least one of the following: the channel matrix, the first matrix, the indication information of the first matrix, the first set of zenith and azimuth angles, the first quantity of layers, the first quantity, the first request information, the first receive power, and the first path loss, where the channel matrix, the first matrix, the indication information of the first matrix, the first set of zenith and azimuth angles, the first quantity of layers, the first quantity, the first receive power, and/or the first path loss are parameters of an entire wideband, and the first request information also corresponds to the entire wideband.

If the frequency domain configuration that is in the first information and that is for reporting the third information is a subband, content of the third information includes a measurement quantity corresponding to each (enabled) subband. The third information may include N first matrices and/or indication information of the N first matrices, where each of the first matrices corresponds to one subband, and indication information of each of the first matrices corresponds to one subband.

For example, the frequency domain configuration for reporting the third information is indicated as a subband, the third information includes N parameter sets, each of the parameter sets corresponds to one subband, and each of the parameter sets includes at least one of the following: a first matrix and indication information of the first matrix.

In a possible implementation, the third information may further include at least one of the following: N first sets of a zenith angle and an azimuth angle, N first quantities of layers, N first quantities, N pieces of first request information, N pieces of first receive power, and N first path losses, where each of the first sets of a zenith angle and an azimuth angle, each of the first quantities of layers, each of the first quantities, each of the pieces of first request information, each of the pieces of first receive power, and each of the first path losses respectively correspond to one subband. For example, each of the N parameter sets further includes at least one of the following: a first set of zenith and azimuth angles, a first quantity of layers, a first quantity, first request information, first receive power, and a first path loss.

It should be noted that N is a positive integer less than or equal to a quantity of subbands. N may be a quantity of all subbands, or may be a quantity of all subbands that need to be reported.

In a possible implementation, the third information may further include at least one of the following: the first set of zenith and azimuth angles, the first quantity of layers, the first quantity, the first request information, the first receive power, and the first path loss, where the content included in the third information corresponds to all subbands. For example, the first request information may request to perform CLI suppression in all subbands.

It should be noted that all subbands may be all subbands that receive a reference signal, or may be all subbands that need to be reported and that are indicated by the first network device.

It should be understood that, a part of the content included in the third information may correspond to one subband, and a part of the content included in the third information may correspond to all subbands. For example, the third information may include N first matrices and one piece of first request information.

It should be understood that the reporting quantity specifically included in the content that may be included in the third information has been indicated in the first information. For specific content of the reporting quantity, refer to the descriptions of the first information in S310.

S350: The first network device sends a second signal to a terminal device based on the third information.

Optionally, the first network device determines, based on the third information, precoding used for sending the second signal.

For example, that the first network device determines, based on the third information, the precoding used for sending the second signal includes but is not limited to the following two possible methods.

Method 1: Determine, based on a zenith angle and an azimuth angle, the precoding used for sending the second signal.

Step 1: The first network device determines initial precoding **V***ᵢ* based on a channel matrix **H***ᵢ* between the first network device and the terminal device.

**V***ᵢ* is a right-singular vector obtained by performing SVD decomposition on **H***ᵢ*, and *i =* 0,1, *..., N_{UE} -* 1.

**H***ᵢ* is a two-dimensional matrix, where a row represents an antenna port of the terminal device, and a column represents the antenna port of the first network device.

**V***ᵢ* is a two-dimensional matrix, where a row represents the antenna port of the first network device, and a column represents a quantity of layers.

*N_{UE}* is a quantity of terminal devices served by the first network device.

Step 2: Determine a first matrix **V**_{CBF} based on a zenith angle *θ* and an azimuth angle *φ*. ${V}_{CBF} \left(φ, θ\right) = v ⊗ w$

A vertical weight vector **w** is a one-dimensional column vector, a length is *Mₚ,* and *Mₚ* is a quantity of antenna ports that are of the first network device and that are in a polarization direction in a vertical direction, where ${w}_{m} = \frac{1}{\sqrt{{M}_{p}}} exp \left(-j\frac{2 π}{λ}\left(m-1\right){d}_{V}cosθ\right) , and m = 1 , 2 , … , {M}_{p} .$

A horizontal weight vector v is a one-dimensional column vector, a length is *Nₚ,* and *Nₚ* is a quantity of antenna ports that are of the first network device and that are in a polarization direction in a horizontal direction, where ${v}_{n} = \frac{1}{\sqrt{{N}_{p}}} exp \left(-j\frac{2 π}{λ}\left(n-1\right){d}_{H}sinθ⋅sinφ\right) , and m = 1 , 2 , … , {N}_{p} .$

λ is a signal wavelength, *d_{V}* is a distance between two adjacent antenna ports in the vertical direction, *d_{H}* is a distance between two adjacent antenna ports in the horizontal direction, and ⊗ represents a Kronecker product (Kronecker product).

Step 3: Determine, based on the first matrix **V**_{CBF}, the precoding ***W**ᵢ* for sending the second signal, where *i = 0,1,* ... , *N_{UE} -* 1. $W = V {\left[{\left({V}^{H}V\right)}^{- 1}\right]}^{H}$ $V = \left[{V}_{0},{V}_{1},…,{V}_{{N}_{UE} - 1},{V}_{CBF}\right]$ $W = \left[{W}_{0},{W}_{1},…,{W}_{{N}_{UE} - 1},{W}_{CBF}\right]$

It should be understood that, in Method 1, the first measurement result needs to include information about the zenith angle and the azimuth angle, that is, the third information includes the information about the zenith angle and the azimuth angle.

Method 2: Determine, based on the first matrix, the precoding used for sending the second signal. It should be understood that Method 2 is similar to Method 1, but only step 1 and step 3 are performed, and ***V***_{CBF} in step 3 is replaced with the first matrix in the first measurement result or the first matrix indicated by the indication information of the first matrix. Another difference lies in that a quantity of columns of the first matrix is indicated by the first quantity of layers in the first measurement result.

It should be understood that in Method 2, the first measurement result needs to include the first matrix or the indication information of the first matrix, and the first quantity of layers, that is, the third information includes the first matrix or the indication information of the first matrix, and the first quantity of layers.

In this embodiment of this application, the first matrix is a two-dimensional matrix, and resource overheads can be reduced.

When the frequency band for reporting is the wideband, if the third information includes request information, and the request information is for requesting the first network device to perform CLI suppression on the second network device, the first network device determines, based on the third information, the precoding used for sending the second signal. For example, the first network device may use a method like Method 1 or Method 2, but is not limited to these two methods.

If the third information includes request information, and the request information is for requesting the first network device not to perform CLI suppression on the second network device, the first network device does not determine, based on the third information, the precoding used for sending the second signal. For example, a conventional technology is for determining the precoding used for sending the second signal.

If the third information does not include request information, but includes CSI-RS RSRP or a path loss, the first network device may determine, based on the CSI-RS RSRP or the path loss, whether the first network device performs CLI suppression on the second network device. For example, if the CSI-RS RSRP is greater than the first threshold, or the path loss is less than the second threshold, the first network device performs CLI suppression on the second network device. On the contrary, if the CSI-RS RSRP is less than or equal to the first threshold, or the path loss is greater than or equal to the second threshold, the first network device does not perform CLI suppression on the second network device.

When the frequency band for reporting is the subband, if the third information includes a plurality of pieces of request information, the request information is for requesting the first network device to perform CLI suppression on the second network device, and each piece of request information corresponds to one subband, the first network device determines, based on the third information only in a subband corresponding to the request information, the precoding used for sending the second signal. For example, the first network device may use a method like Method 1 or Method 2, but is not limited to these two methods.

If the third information includes a plurality of pieces of request information, the request information is for requesting the first network device not to perform CLI suppression on the second network device, and each piece of request information corresponds to one subband, the first network device does not determine, based on the third information in a subband corresponding to the request information, the precoding used for sending the second signal. For example, a conventional technology is for determining, in the subband corresponding to the request information, the precoding used for sending the second signal.

If the third information does not include request information, but includes a plurality of pieces of CSI-RS RSRP or a plurality of path losses, the first network device may determine, based on the pieces of CSI-RS RSRP or the path losses, whether the first network device performs CLI suppression on the second network device. For example, the first network device performs CLI suppression on the second network device in a subband whose CSI-RS RSRP is greater than the first threshold or path loss is less than the second threshold; or the first network device does not perform CLI suppression on the second network device in a subband whose CSI-RS RSRP is less than or equal to the first threshold or path loss is greater than or equal to the second threshold.

CBF is used as an example for suppressing CLI between network devices. Correspondingly, the first matrix may be referred to as a CBF matrix. However, another method may be used for the technology for suppressing cross-link interference, or CBF may have another name. Correspondingly, a name of the first matrix may also change. A method for suppressing the cross-link interference between the network devices is not limited in this application.

In this embodiment of this application, the first matrix may be transferred in a plurality of manners, to suppress the cross-link interference, thereby improving communication flexibility.

In a possible implementation, between steps S310 and S320, this embodiment of this application may further include S360 and S370.

S360: The second network device sends fourth information to the first network device, where the fourth information indicates the first network device to modify the first measurement resource.

The fourth information includes measurement resource modification request signaling, and is for notifying the first network device to modify the first measurement resource.

Optionally, the fourth information further includes a measurement parameter that is recommended or not recommended, for example,
a measurement resource ID;
a time domain resource, including a periodicity, an offset, a symbol location, and the like;
a frequency domain resource, including bandwidth, a density, an RE location, and the like;
a space domain resource, including a quantity of ports, a CDM type, and the like; and
a power domain resource like transmit power.

It should be understood that, if the second network device finds that the first measurement resource configured by the first network device for the second network device is inappropriate, for example, conflicts with a measurement resource configured by another network device for the second network device, the second network device may send the fourth information to request the first network device (based on the measurement parameter that is recommended or not recommended) to modify the first measurement resource. It should be understood that after receiving the fourth information, the first network device may re-determine a first measurement resource.

S370: The first network device sends fifth information and/or sixth information to the second network device.

That the fifth information re-indicates a first measurement resource includes the following:
Method 1: The fifth information is for reconfiguring a first measurement resource. It should be understood that the method is applicable to a periodic measurement resource.
Method 2: The fifth information includes fifth signaling, and the fifth signaling deactivates the previous first measurement resource and activates a new first measurement resource. It should be understood that the method is applicable to a semi-persistent measurement resource.
Method 3: The fifth information includes sixth signaling, and the sixth signaling triggers a new first measurement resource. It should be understood that the method is applicable to an aperiodic measurement resource.

That the sixth information re-indicate a first reporting setting includes the following:
Method 1: The sixth information is for reconfiguring a first reporting setting. It should be understood that the method is applicable to a periodic reporting resource.
Method 2: The sixth information includes seventh signaling, and the seventh signaling deactivates the previous first reporting setting and activates a new first reporting setting. It should be understood that the method is applicable to a semi-persistent reporting resource.
Method 3: The sixth information includes eighth signaling, and the eighth signaling triggers a new first reporting setting. It should be understood that the method is applicable to an aperiodic reporting resource.

The fourth information is sent to modify the first measurement resource, so that the inappropriate resource may be modified to improve communication reliability.

Based on the foregoing solution, the first network device may obtain, from the third information, a parameter that can be used for suppressing cross-link interference, so that the first network device can perform an action of suppressing the cross-link interference, thereby improving communication quality and communication reliability. The first network device indicates, based on the first information, a measurement parameter that needs to be reported by the second network device, to improve communication efficiency. The first network device and the second network device exchange the start time of the first signal, to align time for sending the first signal with time for measuring the first signal, and improve measurement accuracy. In this embodiment of this application, a measurement result may be reported by using a two-dimensional matrix, thereby reducing resource overheads.

It should be understood that, in the foregoing method, the first network device and the second network device exchange information about measurement and reporting with each other. In practice, the information about measurement and reporting may alternatively be sent by another device to the first network device and the second network device.

FIG. 4 is a schematic flowchart of another communication method according to an embodiment of this application.

S410: A third network device sends first information to a first network device, and sends second information and third information to a second network device.

Optionally, the third network device is an OAM, and the first network device and the second network device are gNBs.

Optionally, the third network device is a gNB-CU, and the first network device and the second network device are gNB-DUs.

It should be understood that the third network device is a central node.

The first information indicates a first sending resource. The first sending resource is used by the first network device to send a first signal, and the first sending resource may include at least one of the following: a measurement resource ID, a time domain resource, a frequency domain resource, a code domain resource, a sequence resource, a space domain resource, and a power domain resource.

Optionally, the first information indicates a plurality of first sending resources. For example, the first information indicates one first sending resource set and the first sending resource set includes at least one first sending resource, or the first information indicates a plurality of first sending resource sets.

S420: The third network device sends the second information and the third information to the second network device.

The second information indicates the second network device to report fourth information to the first network device, the fourth information is for suppressing cross-link interference of the first network device to the second network device, and the first signal is for determining the fourth information. For the second information, refer to the descriptions of the first information in S310. Details are not described herein again.

The third information indicates a first measurement resource, and the first measurement resource is used by the second network device to receive and measure the first signal, and includes a network device ID, a measurement resource ID, a time domain resource, a frequency domain resource, a code domain resource, a sequence resource, a space domain resource, and a power domain resource. For details, refer to the descriptions of the second information in S310. Details are not described herein again.

It should be understood that a difference between the first sending resource and the first measurement resource lies in the following: The first sending resource indicates a necessary resource for sending the first signal, and the first measurement resource indicates a necessary resource for receiving and measuring the first signal. In other words, one is used for sending, and the other is used for receiving and measurement. In addition, the first measurement resource includes the network device ID, which is not required for the first sending resource.

Optionally, the first signal is a reference signal used for measurement between network devices. For example, the first signal is a CSI-RS.

S430: The first network device sends the first signal to the second network device.

S440: The second network device measures the first signal, and determines a first measurement result.

S450: The second network device sends the fourth information to the first network device, where the fourth information includes the first measurement result.

For specific descriptions of the fourth information, refer to the descriptions of the third information in S310. Details are not described herein again.

S460: The first network device sends a second signal to a terminal device based on the fourth information.

The first network device determines, based on the fourth information, precoding used for sending the second signal. For a specific method, refer to the descriptions in S350. Details are not described herein again.

In a possible implementation, between steps S420 and S430, this embodiment of this application may further include S470 and S480.

S470: The second network device sends fifth information to the third network device, where the fifth information is used for requesting the third network device to perform modification.

The fifth information includes a network device ID and measurement resource modification request signaling, where the measurement resource modification request signaling is fore requesting the third network device to perform modification.

If the network device ID indicates the first network device, the measurement resource modification request signaling requests the third network device to modify the first sending resource. If the network device ID indicates the second network device, the measurement resource modification request signaling requests the third network device to modify the first measurement resource.

It should be understood that, the network device needs to let the central node know a first sending resource that needs to be modified and on which a specific network device sends the first signal, and/or the network device needs to let the central node know a first measurement resource that needs to be modified and on which the first signal sent by a specific network device is received.

Optionally, the fifth information further includes a measurement parameter that is recommended or not recommended, for example,
a measurement resource ID;
a time domain resource, including a periodicity, an offset, a symbol location, and the like;
a frequency domain resource, including bandwidth, a density, an RE location, and the like;
a space domain resource, including a quantity of ports, a CDM type, and the like; and
a power domain resource like transmit power.

It should be understood that, if the second network device finds that the first measurement resource configured by the third network device for the second network device is inappropriate, for example, conflicts with a measurement resource configured by another network device for the second network device, the second network device may send the fifth information to request the third network device (based on the measurement parameter that is recommended or not recommended) to perform modification.

S480: The third network device sends sixth information to the first network device, and/or the third network device sends seventh information and/or eighth information to the second network device.

The sixth information indicates a modified first sending resource.

The seventh information indicates a modified first measurement resource. Refer to the descriptions of the fifth information in S370.

The eighth information indicates a modified first reporting setting. Refer to the descriptions of the sixth information in S370.

It should be understood that sequence numbers of the foregoing processes do not mean an execution sequence. The execution sequence of the processes should be determined based on functions and internal logic of the processes, and should not constitute any limitation on the implementation processes of embodiments of this application.

It should be further understood that, in embodiments of this application, unless otherwise specified or logically conflicted, terms and/or descriptions in different embodiments are consistent and may be mutually referenced, and technical features in different embodiments may be combined based on an internal logical relationship thereof, to form a new embodiment.

It should be further understood that in some of the foregoing embodiments, devices in an existing network architecture are mainly used as examples for description. It should be understood that specific forms of the devices are not limited in embodiments of this application. For example, all devices that can implement a same function in the future are applicable to embodiments of this application.

It may be understood that, in the foregoing method embodiments, the methods and operations implemented by a device (for example, the terminal device or the network device) may also be implemented by a component (for example, a chip or a circuit) of the device.

The method provided in embodiments of this application is described above in detail with reference to FIG. 1 to FIG. 4. The foregoing method is mainly described from a perspective of interaction between communication devices. It may be understood that, to implement the foregoing functions, the communication devices include corresponding hardware structures and/or software modules for performing the functions.

A person skilled in the art may be aware that, with reference to the units and algorithm steps in the examples described in embodiments disclosed in this specification, this application can be implemented by hardware or a combination of hardware and computer software. Whether a function is performed by hardware or hardware driven by computer software depends on a particular application and a design constraint condition of the technical solutions. A person skilled in the art may use different methods to implement the described functions for each particular application, but it should not be considered that the implementation goes beyond the scope of this application.

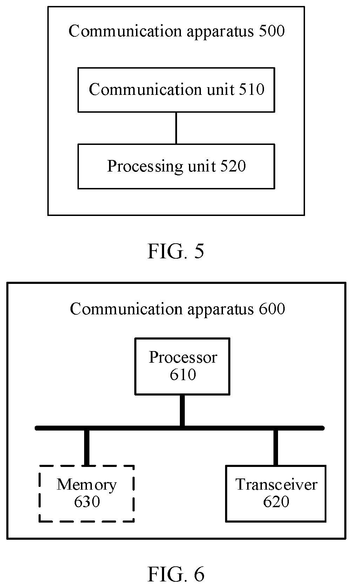

The communication apparatuses provided in embodiments of this application are described in detail with reference to FIG. 5 and FIG. 6. It should be understood that descriptions of apparatus embodiments and the descriptions of the method embodiments correspond to each other. Therefore, for content that is not described in detail, refer to the foregoing method embodiments. For brevity, some content is not described again. In embodiments of this application, the terminal device or the network device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in actual implementation. An example in which each functional module is obtained through division based on each corresponding function is used below for description.

The foregoing describes in detail the data transmission method provided in this application. The following describes communication apparatuses provided in this application. In a possible implementation, the apparatuses are configured to implement the steps or procedures corresponding to the network device in the foregoing method embodiments. In another possible implementation, the apparatuses are configured to implement the steps or procedures corresponding to the terminal device in the foregoing method embodiments.

FIG. 5 is a block diagram of a communication apparatus 500 according to an embodiment of this application. As shown in FIG. 5, the apparatus 500 may include a communication unit 510 and a processing unit 520. The communication unit 510 may communicate with the outside, and the processing unit 520 is configured to process data. The communication unit 510 may also be referred to as a communication interface or a transceiver unit.

In a possible design, the apparatus 500 may implement the corresponding steps or procedures performed by the terminal device in the foregoing method embodiments. The processing unit 520 is configured to perform the processing-related operations of the terminal device in the foregoing method embodiments, and the communication unit 510 is configured to perform the sending-related operations of the terminal device in the foregoing method embodiments.

In another possible design, the apparatus 500 may implement the corresponding steps or procedures performed by the network device in the foregoing method embodiments. The communication unit 510 is configured to perform the receiving-related operations of the network device in the foregoing method embodiments, and the processing unit 520 is configured to perform the processing-related operations of the network device in the foregoing method embodiments.

It should be understood that the apparatus 500 herein is implemented in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combined logic circuit, and/or another suitable component that supports the described functions. In an optional example, a person skilled in the art may understand that, the apparatus 500 may be specifically the terminal device in the foregoing embodiments, and may be configured to perform the procedures and/or steps corresponding to the terminal device in the foregoing method embodiments; or the apparatus 500 may be specifically the network device in the foregoing embodiments, and may be configured to perform the procedures and/or steps corresponding to the network device in the foregoing method embodiments. To avoid repetition, details are not described herein again.

The apparatus 500 in each of the foregoing solutions has a function of implementing the corresponding steps performed by the terminal device in the foregoing method, or the apparatus 500 in each of the foregoing solutions has a function of implementing the corresponding steps performed by the network device in the foregoing method. The function may be implemented by hardware, or may be implemented by hardware executing corresponding software. The hardware or the software includes one or more modules corresponding to the foregoing function. For example, the communication unit may be replaced with a transceiver (for example, a sending unit of the communication unit may be replaced with a transmitter, and a receiving unit of the communication unit may be replaced with a receiver), and another unit like the processing unit may be replaced with a processor, to separately perform the sending and receiving operations and the related processing operations in the method embodiments.

In addition, the communication unit may alternatively be a transceiver circuit (for example, may include a receive circuit and a sending circuit), and the processing unit may be a processing circuit. In this embodiment of this application, the apparatus in FIG. 5 may be the AP or the STA in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 6 is a block diagram of a communication apparatus 600 according to an embodiment of this application. The apparatus 600 includes a processor 610 and a transceiver 620. The processor 610 and the transceiver 620 communicate with each other through an internal connection path, and the processor 610 is configured to execute instructions, to control the transceiver 620 to send a signal and/or receive a signal.

Optionally, the apparatus 600 may further include a memory 630. The memory 630, the processor 610 and the transceiver 620 communicate with each other through an internal connection path. The memory 630 is configured to store instructions, and the processor 610 may execute the instructions stored in the memory 630. In a possible implementation, the apparatus 600 is configured to implement the procedures and steps corresponding to the terminal device in the foregoing method embodiments. In another possible implementation, the apparatus 600 is configured to implement the procedures and steps corresponding to the network device in the foregoing method embodiments.

It should be understood that, the apparatus 600 may be specifically the terminal device or the network device in the foregoing embodiments, or may be a chip or a chip system. Correspondingly, the transceiver 620 may be a transceiver circuit of the chip. This is not limited herein. Specifically, the apparatus 600 may be configured to perform the steps and/or procedures corresponding to the terminal device or the network device in the foregoing method embodiments. Optionally, the memory 630 may include a read-only memory and a random access memory, and provide instructions and data for the processor. A part of the memory may further include a non-volatile random access memory. For example, the memory may further store information about a device type. The processor 610 may be configured to execute the instructions stored in the memory, and when the processor 610 executes the instructions stored in the memory, the processor 610 is configured to perform the steps and/or procedures in the foregoing method embodiments corresponding to the terminal device or the network device.

In an implementation process, the steps in the foregoing method can be completed by using a hardware-integrated logical circuit in the processor, or by using instructions in a form of software. The steps of the method disclosed with reference to embodiments of this application may be directly performed by a hardware processor, or may be performed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory, and completes the steps in the foregoing method in combination with the hardware of the processor. To avoid repetition, details are not described herein again.

It should be noted that, the processor in embodiments of this application may be an integrated circuit chip, and has a signal processing capability. In an implementation process, the steps in the foregoing method embodiments can be completed by using a hardware-integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate, a transistor logic device, or a discrete hardware component. The processor in embodiments of this application may implement or perform the method, the steps, and the logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory, and completes the steps in the foregoing method in combination with the hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memories of the systems and methods described in this specification are intended to include, but not limited to, these memories and any memory of another appropriate type.

It should be noted that, when the processor is a general-purpose processor, a DSP, an ASIC, an FPGA or another programmable logic device, a discrete gate, a transistor logic device, or a discrete hardware component, the memory (storage module) may be integrated into the processor.

In addition, this application further provides a computer-readable storage medium. The computer-readable storage medium stores computer instructions, and when the computer instructions are run on a computer, the operations and/or procedures performed by the terminal device or the network device in the method embodiments of this application are performed.

This application further provides a computer program product. The computer program product includes computer program code or instructions. When the computer program code or the instructions are run on a computer, the operations and/or procedures performed by the terminal device or the network device in the method embodiments of this application are performed.

In addition, this application further provides a chip, and the chip includes a processor. A memory configured to store a computer program is disposed independent of the chip. The processor is configured to execute the computer program stored in the memory, so that the operations and/or processing performed by the terminal device or the network device in any one of the method embodiments are performed.

Further, the chip may include a communication interface. The communication interface may be an input/output interface, an interface circuit, or the like. Further, the chip may include the memory.

In addition, this application further provides a communication system, including the network device in embodiments of this application.

It should be further noted that, the memories described in this specification are intended to include, but not limited to, these memories and any memory of another appropriate type.

A person of ordinary skill in the art may be aware that, the units and algorithm steps in the examples described with reference to embodiments disclosed in this specification can be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for detailed working processes of the foregoing system, apparatus, and unit, refer to the corresponding processes in the foregoing method embodiments. Details are not described herein again. In the several embodiments provided in this application, it should be understood that the disclosed system, apparatus, and method may be implemented in another manner. For example, the foregoing apparatus embodiments are merely examples. For example, division into the units is merely logical function division, and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form. The units described as separate parts may or may not be physically separate, and parts displayed as units may or may not be physical units, may be at one location, or may be distributed on a plurality of network units. Some or all of the units may be selected based on actual requirements to achieve the objectives of the solutions of the embodiments. In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be further understood that, ordinal numbers such as "first" and "second" in embodiments of this application are used to distinguish between a plurality of objects, but are not intended to limit sizes, content, a sequence, a time sequence, priorities, importance, or the like of the plurality of objects. For example, the first information and the second information do not indicate a difference in an information amount, content, a priority, importance, or the like.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that, in this application, "at least one" means one or more, and "a plurality of" means two or more. "At least one item (piece)" or a similar expression thereof means one item (piece) or a plurality of items (pieces), that is, any combination of these items includes a single item (piece) or any combination of a plurality of items (pieces). For example, at least one of a, b, or c indicates a, b, c, a and b, a and c, b and c, or a, b, and c.

It should be further understood that, unless otherwise specified, a meaning of an expression similar to "an item includes one or more of the following: A, B, and C" in this application usually means that the item may be any one of the following: A; B; C; A and B; A and C; B and C; A, B and C; A and A; A, A and A; A, A and B; A, A and C; A, B and B; A, C and C; B and B; B, B and B; B, B and C; C and C; C, C and C, and another combination of A, B, and C. The foregoing uses three elements A, B, and C as an example to describe optional cases of the item. When an expression is "an item includes at least one of the following: A, B, ..., and X", that is, more elements are included in the expression, a case to which the item is applicable may also be obtained according to the foregoing rule.

It should be further understood that, the term "and/or" in this specification describes only an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Variations or replacements readily figured out by any person skilled in the art within the technical scope disclosed in this application shall fall within the protection scope of this application. Therefore, the protection scope of this application shall be subject to the protection scope of the claims.

## Claims

1. A communication method, comprising:
sending, by a first network device, first information and second information to a second network device, wherein the first information indicates the second network device to report third information, the third information is for suppressing cross-link interference of the first network device to the second network device, the second information is for configuring a first measurement resource, the first measurement resource is used by the second network device to receive a first signal, and the first signal is for determining the third information;
sending, by the first network device, the first signal to the second network device; and
receiving, by the first network device, the third information from the second network device.

2. The method according to claim 1, wherein the third information comprises at least one of the following:
a first matrix, wherein the first matrix is for suppressing the cross-link interference of the first network device to the second network device;
indication information of the first matrix, wherein the indication information of the first matrix is for determining the first matrix; and
a first set of zenith and azimuth angles, wherein the first set of zenith and azimuth angles is for suppressing the cross-link interference of the first network device to the second network device.

3. The method according to claim 2, wherein the third information further comprises a first quantity of layers and/or a first quantity, the first quantity of layers comprises a quantity of columns of the first matrix, the first quantity comprises a quantity of elements comprised in the first set of zenith and azimuth angles, and one element in the first set of zenith and azimuth angles comprises one zenith angle and one azimuth angle.

4. The method according to any one of claims 1 to 3, wherein the first information comprises first indication information, and the first indication information indicates that a frequency band in which the third information is reported is a subband; and
the third information comprises N first matrices and/or indication information of the N first matrices, wherein each of the first matrices corresponds to one subband, indication information of each of the first matrices corresponds to one subband, the first matrices are for suppress the cross-link interference of the first network device to the second network device, the indication information of the first matrices is for determining the first matrices, and N is a positive integer less than or equal to a quantity of subbands.

5. The method according to any one of claims 1 to 4, wherein the third information further comprises first request information, and the first request information is for requesting to suppress the cross-link interference of the first network device to the second network device.

6. The method according to any one of claims 1 to 5, wherein the method further comprises:
receiving, by the first network device, first receive power and/or a first path loss from the second network device, wherein the first receive power is receive power at which the second network device receives the first signal, and the first path loss is a path loss from the first network device to the second network device; and
determining, by the first network device, whether to suppress the cross-link interference of the first network device to the second network device.

7. The method according to any one of claims 1 to 6, wherein the first information further indicates that the third information comprises at least one of the following:
the first matrix, wherein the first matrix is for suppressing the cross-link interference of the first network device to the second network device;
the indication information of the first matrix, wherein the indication information of the first matrix is for determining the first matrix;
the first set of zenith and azimuth angles, wherein the first set of zenith and azimuth angles is for suppressing the cross-link interference between the first network device and the second network device;
the first quantity of layers, wherein the first quantity of layers is the quantity of columns of the first matrix;
the first quantity, wherein the first quantity is the quantity of elements comprised in the first set of zenith and azimuth angles, and one element in the first set of zenith and azimuth angles comprises one zenith angle and one azimuth angle; and
the first request information, wherein the first request information is for requesting to suppress the cross-link interference of the first network device to the second network device.

8. The method according to any one of claims 1 to 7, wherein the first information comprises second indication information, and the second indication information indicates the first quantity of layers and/or the first quantity.

9. The method according to any one of claims 1 to 8, wherein the second information comprises transmit power of the first signal on one frequency unit and/or start time of the first signal.

10. The method according to any one of claims 1 to 9, wherein the method further comprises: sending, by the first network device, first configuration information to the second network device, wherein the first configuration information is for configuring a first reporting setting, and the first reporting setting is used by the second network device to report the third information.

11. The method according to any one of claims 1 to 10, wherein the method further comprises:
receiving, by the first network device, fourth information from the second network device, wherein the fourth information indicates the first network device to modify the first measurement resource; and
sending, by the first network device, fifth information to the second network device based on the fourth information, wherein the fifth information indicates a modified first measurement resource.

12. The method according to claim 11, wherein the fourth information comprises a parameter that is recommended or not recommended by the second network device.

13. The method according to any one of claims 1 to 12, wherein the method further comprises:
sending, by the first network device, a second signal to a terminal device based on the third information.

14. A communication method, comprising:
receiving, by a second network device, first information and second information from a first network device, wherein the first information indicates the second network device to report third information, the third information is for suppressing cross-link interference of the first network device to the second network device, the second information is for configuring a first measurement resource, the first measurement resource is used by the second network device to receive a first signal, and the first signal is for determining the third information;
receiving, by the second network device, the first signal from the first network device; and
sending, by the second network device, the third information to the first network device.

15. The method according to claim 14, wherein the third information comprises at least one of the following:
a first matrix, wherein the first matrix is for suppressing the cross-link interference of the first network device to the second network device;
indication information of the first matrix, wherein the indication information of the first matrix is for determining the first matrix; and
a first set of zenith and azimuth angles, wherein the first set of zenith and azimuth angles is for suppressing the cross-link interference between the first network device and the second network device.

16. The method according to claim 15, wherein the third information further comprises a first quantity of layers and/or a first quantity, the first quantity of layers is a quantity of columns of the first matrix, the first quantity is a quantity of elements comprised in the first set of zenith and azimuth angles, and one element in the first set of zenith and azimuth angles comprises one zenith angle and one azimuth angle.

17. The method according to any one of claims 14 to 16, wherein the first information comprises first indication information, and the first indication information indicates that a frequency band in which the third information is reported is a subband; and
the third information comprises N first matrices and/or indication information of the N first matrices, wherein each of the first matrices corresponds to one subband, indication information of each of the first matrices corresponds to one subband, the first matrices are for suppress the cross-link interference of the first network device to the second network device, the indication information of the first matrices is for determining the first matrices, and N is a positive integer less than or equal to a quantity of subbands.

18. The method according to any one of claims 14 to 17, wherein the third information further comprises first request information, and the first request information is for requesting to suppress the cross-link interference of the first network device to the second network device.

19. The method according to any one of claims 14 to 18, wherein the method further comprises:
sending, by the second network device, first receive power and/or a first path loss to the first network device, wherein the first receive power is receive power at which the second network device receives the first signal, and the first path loss is a path loss from the first network device to the second network device.

20. The method according to any one of claims 14 to 19, wherein the first information further indicates that the third information comprises at least one of the following:
the first matrix, wherein the first matrix is for suppressing the cross-link interference of the first network device to the second network device;
the indication information of the first matrix, wherein the indication information of the first matrix is for determining the first matrix;
the first set of zenith and azimuth angles, wherein the first set of zenith and azimuth angles is for suppressing the cross-link interference between the first network device and the second network device;
the first quantity of layers, wherein the first quantity of layers is the quantity of columns of the first matrix;
the first quantity, wherein the first quantity is the quantity of elements comprised in the first set of zenith and azimuth angles, and one element in the first set of zenith and azimuth angles comprises one zenith angle and one azimuth angle; and
the first request information, wherein the first request information is for requesting to suppress the cross-link interference of the first network device to the second network device.

21. The method according to any one of claims 14 to 20, wherein the first information comprises second indication information, and the second indication information indicates the first quantity of layers and/or the first quantity.

22. The method according to any one of claims 14 to 21, wherein the second information comprises transmit power of the first signal on one frequency unit and/or start time of the first signal.

23. The method according to any one of claims 14 to 22, wherein the method further comprises: receiving, by the second network device, first configuration information sent by the first network device, wherein the first configuration information is for configuring a first reporting setting, and the first reporting setting is used by the second network device to report the third information.

24. The method according to any one of claims 14 to 23, wherein the method further comprises:
sending, by the second network device, fourth information to the first network device, wherein the fourth information indicates the first network device to modify the first measurement resource; and
receiving, by the second network device, fifth information sent by the first network device, wherein the fifth information indicates a modified first measurement resource.

25. The method according to claim 24, wherein the fourth information comprises a parameter that is recommended or not recommended by the second network device.

26. A communication apparatus, comprising a processor, wherein the processor is configured to execute a computer program or instructions or use a logic circuit,
to cause the communication apparatus to perform the method according to any one of claims 1 to 13; or
to cause the communication apparatus to perform the method according to any one of claims 14 to 25.

27. The communication apparatus according to claim 26, wherein the communication apparatus further comprises a memory, and the memory is configured to store the computer program or the instructions.

28. The communication apparatus according to claim 26 or 27, wherein the communication apparatus further comprises a communication interface, and the communication interface is configured to input and/or output a signal.

29. A communication apparatus, comprising a logic circuit and an input/output interface, wherein the input/output interface is configured to input and/or output a signal; and
the logic circuit is configured to perform the method according to any one of claims 1 to 13; or
the logic circuit is configured to perform the method according to any one of claims 14 to 25.

30. A computer-readable storage medium, wherein the computer-readable storage medium stores a computer program or instructions; and when the computer program or the instructions are run on a computer,
the method according to any one of claims 1 to 13 is performed; or
the method according to any one of claims 14 to 25 is performed.

31. A computer program product, comprising instructions, wherein when the instructions are run on a computer,
the method according to any one of claims 1 to 13 is performed; or
the method according to any one of claims 14 to 25 is performed.
